# EUROPEAN PATENT APPLICATION

(11) **EP 1 811 274 A1**
(43) Date of publication of application: **25.07.2007**
(21) Application number: 06100562.5
(22) Date of filing: 19.01.2006
(51) Int. Cl.: G01F 23/24, G01N 27/06, G01R 27/22

(54) **Water level measurement system**

(71) Applicant: WHIRLPOOL CORPORATION, Benton Harbor Michigan 49022 (US)
(72) Inventor: Parachini, Davide c/o Whirlpool Europe s.r.l., 21025, Comerio (IT); Crosta, Paolo c/o Whirlpool Europe s.r.l., 21025, Comerio (IT)
(74) Representative: Guerci, Alessandro

(57) **Abstract**

An economic water level measurement system based upon the detection of water within a reservoir by the measure of the electrical conductivity of the water between two electrodes, of the type including: an electronic synchronous detection circuit comprising an ac generator which generates an ac source signal, a resistor connected is series with one of said electrodes and fed with said ac source signal, an amplifier connected to the terminals of said resistor whose output is a conductivity related signal, a comparator device providing an output a signal indicating the presence of water in the reservoir, whereby the electronic circuit further comprises a multiplier having said conductivity related signal and the ac source signal as input and in that the output of said multiplier is fed therefore to a filter device. In particular this system is suitable for a domestic steam oven.

## Description

The subject of the present invention is an economic water level measurement system based on a conductivity-measuring cell, to be used in a water reservoir of an appliance or any device requiring the indication of the water level, and when the water conductivity contained into the cell varies in a wide range of values. In particular this water level measurement system is suitable for a domestic steam oven.

From US 4808931 it is known a four electrodes open cell conductivity sensor capable to measure the conductivity of the ocean water by the use of two pairs of electrodes. The first pair is connected to an AC current supply source, inducing an electric field in the area where the conductivity of the fluid has to be measured. The second pair of electrodes is used to sense the electric field generated by the first pair of electrodes. Both the electrodes are built into a plastic support having symmetric and defined geometry, making the electric field easily predictable. The first pair of current electrodes is fed with a 10 kHz alternate current having small amplitude, to prevent the chemical dissociation of the water. Any variation of the magnitude in the water conductivity causes a modification of the electric field sensed by the second pair of electrodes. An electronic circuit, based on the peak detection technology, and including an operational amplifier having high Common Mode Rejection Ratio values, converts into a voltage signal the electric current flowing between the second pair of electrodes, balancing the noise and the polarization effects induced by the environment, the dirt or the like. The same electronic circuit regulates also the magnitude of the current supply source in order to maintain constant the RMS value of the voltage drop measurable across the first pair of electrodes. In this way the current required for keeping constant the RMS voltage level is linearly proportional, with a certain coefficient depending on the geometry of the sensor, to the conductivity of the fluid. Such coefficient is easy to calculate, because the geometry of the sensor is defined. The amplified voltage signal is then sent to a microcomputer for the sampling and for the further computational purposes to finally calculate the water conductivity. The electronic circuit is placed into an insulated housing located close to the electrodes, therefore keeping neglettable the effects of the electric noise of the close environment. The closeness of the electrodes to the electronic circuit requires short connection wires, causing a voltage phase shift, due to the capacitance effects of the same wires, to be small and balanced by the high common rejection mode (CMRR) of the amplifier.

The output of the amplifier can be transmitted through a long cable to the signal process equipment, for further processing.

From patent US6810732 it is known an apparatus for sensing the water level in a water tub using a conductivity measuring cell provided with two pairs of electrodes (reference and measuring) embedded into the water tub. The electric conductivity of the water varies according to the type of substances dissolved in the same water. The reference electrodes provide a relative reference signal used, by coupling it with the signal from the measuring electrodes, to evaluate the level of the water present in a water tub of a washing machine.

The measuring electrodes placed in the water tub of a washing machine are extended to be longer than the reference electrode, and are covered by water when it is filled into the tub. The reference electrodes are spaced apart from the measuring electrodes and placed in a lower position than the measuring electrodes, always submerged by the water in the bottom area of the tub. Independently from the turbidity of water, its electric conductivity is in reverse proportion to the length of an electrode but in direct proportion to a contact surface area between the water and the electrode plates. According to this, when the water is fed into the water tub, increasing its level, it enlarges the contact area and the electric conductivity of the cell is proportionally increased. A fixed DC voltage source supplies both the electrode pairs, providing, for each of the two pairs, a voltage signal correlated with the electric conductivity of the water cell. This signal is proportional to the voltage measurable across a precision (shunt) resistor, in series with the electrodes, when the current flows through them. The two voltage signals from the two pairs of electrodes are read by a microprocessor. The reference electrode pair provides a conductivity detection reference value for water level measure, while the measuring electrodes provide the measured conductivity value referred to a contact area between water and electrodes, varying according to the water level. The water level is calculated through the calculation of the difference between the reference and the measuring values of the measured conductivity. This technical solution is particularly effective in water level detection, in condition of turbidity of the water, where the conductivity changes according the substances dissolved in the water tub.

The typical field of use of the above device, i.e. washing machines, doesn't show the limitation of performances when the conductivity values of the water are low, as for the case of distilled water. Moreover, this device doesn't allow emptying completely the water reservoir, requiring an additional space in the lower side of the reservoir.

From the prior art are also known water level measuring devices based on two electrodes into an open conductivity cell, used for a wide range of applications, based on a LC oscillation circuit and on a peak detection circuit. These devices often fail to precisely measure the conductivity because they are relatively unstable with the variation of an outdoor temperature and long-term wear and tear.

Known in the art are also detection methods that include a variation of the frequency "f" of the ac source signal in order to skip coupled signal interference or in order to get indication of the scaling on the electrodes.

It is so disclosed in the art how to detect the presence of the water into a measuring cell containing water presenting good conductivity characteristics (washing machine water or seawater, both in the range of hundreds of µS/cm), having the electrodes are located near to the electronic detecting circuit. Problem arise when the water in the reservoir has low conductivity (lower than 1µS/cm in case of distillated water), and when the measuring circuit cannot be placed nearby the electrodes because the hostile characteristics of the surrounding environment. Said hostile environment is normally characterized by high values of temperature and humidity and by the presence of electric noise.

A hostile environment can be found, for example, into a steam oven provided with a water reservoir for the steam generation, which is located into the oven structure close to the hot cavity of the oven. In this ambient the conditions of temperature and humidity are severe, and the space to position the electronic devices is small so that it is difficult to cool it down. In such case it is likely to position the electronic circuits into an insulated and protected environment like, i.e., the control panel area. Such area can be additionally cooled with fresh air streams to better protect the electronic components. In this case the control panel is probably far from the electrodes (that are within the reservoir), and the connection between the electronic circuit and said electrodes requires long wires, rated to sustain the hostile surrounding environment.

Moreover, in a steam oven as like into many others consumer appliances, it is possible face the problem of low conductivity water. This is typically the case when consumers fill the reservoir using distilled water, trying to reduce the scaling due to the calcium contained in the water, with the purpose of extending the lifetime of the appliance. In this case the resistive value of distilled water into the cell is comparable with the parasitic capacitance of the wires connecting the electronic circuit to the electrodes. It follows that using a peak detector circuit to measure the conductivity related signal, in which the only magnitude of the signal is evaluated, the contribution of the cell resistance is superposed to the parasitic capacitance of the wiring, introducing a big error in the measure, said circuit being not capable to distinguish between the active and reactive components. More specifically the capacitance of the cables connecting the measuring circuit to the electrodes can be in the 100pF range, which gives at the frequency of 1 kHz a capacitive reactance of 1.5 MΩ. In the same way, the resistance of the water in the cell ranges from few hundred MΩ for the distilled water, to some KΩ values for water with salts.

Finally, the electric noise of the close environment is an additional parasitic component that also superposes on the conductivity signal, causing a further deterioration of the conductivity-related signal. This undesired effect becomes more important when long cables, indicatively more than 30 cm long, are used. To reduce the negative impact of the noise, it is learned in the art to locate the electronic board, close to the electrodes and/or to use shielded wires, even though the shielded wires show an important capacitance effect between the two electrodes. These solutions are not always applicable in a hostile hot environment, and they are expensive for a large-scale production purpose, such for the case of consumer appliances.

It follows that it's not possible to measure the presence of very low conductivity water (less than 1 µS/cm), in a reliable and economic way, if a special circuit is not used.

From another standpoint it has been also observed that some other users fill the water reservoir of appliances using mineral water that may presents high conductivity values (more than 1000 µS/cm), for which a standard circuit is suitable.

It finally results the need to have consumer appliances provided of a water or fluid level measurement system that is reliable over a wide range of conductivity values, and that is economical therefore becoming suitable to mass production.

An object of the present invention is therefore to provide a water level measurement system that does not present the drawbacks of the prior art and a method thereof. Other features and advantages of the present invention will become readily apparent to the skilled artisan from the following detailed description when read in light of the accompanying drawings, in which:
- Figure 1 is the schematic diagram showing the model of the measuring channel according to the invention, which is a portion of the water level measurement system;
- Figure 2A is schematic view of the disposition of the electrodes into the water reservoir;
- Figure 2B shows a block diagram of a synchronous detector circuit, implementing part the electronic circuit of the measuring channel shown in Fig.1;
- Figure 3 shows a model of the excitation circuit and probes into the water according to the measuring channel shown in Fig. 1;
- Figures 4 - 7 are schematic representations of water level measurement systems, when the water reservoir is filled at different levels;
- Figure 4A shows a different disposition of the electrodes in the water reservoir when the water reservoir in not used as a reference electrode connected to ground;
- Figures 8 - 9 show plots of the electronic output signals according to the invention, compared with the outputs obtained by using the peak detection circuit known in the art;
- Figure 8A is a detail of the Vₓ signal plotted in Fig 8 and 9, showing how the sampling instants are positioned into the signal period.

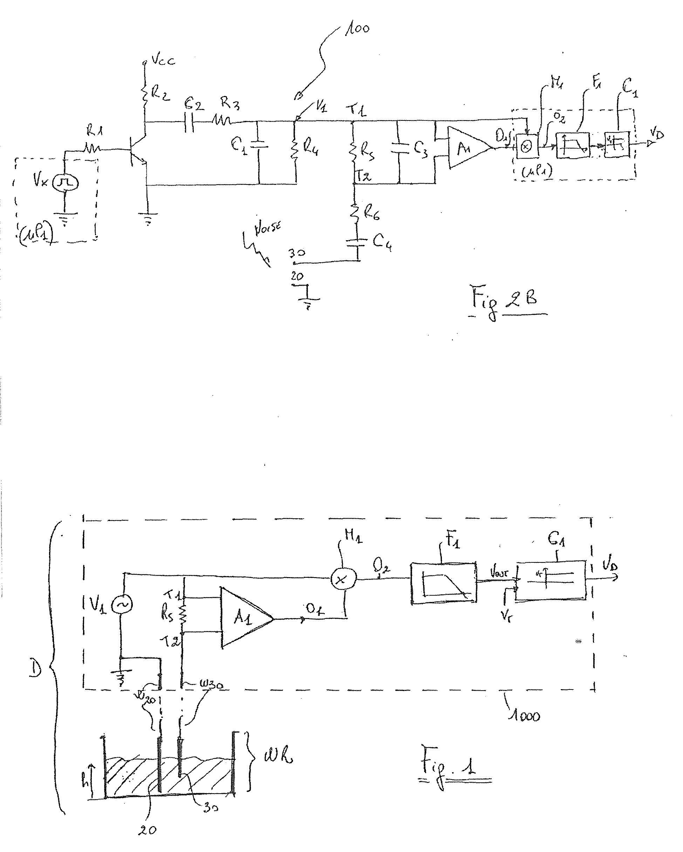

With reference to the drawings, the water level measurement system 1 of the present invention is based upon the detection/sensing of the water within a measuring channel D, by the measure of its electric conductivity through an electronic synchronous detection circuit 1000. The schematic diagram of Fig 1 describes the basic structure of a single measuring channel D, portion of the water level measuring system 1, which includes a pair of electrodes 20, 30 located into the water reservoir WR. The electronic synchronous detection circuit 1000, portion of the whole electronic circuit 100 of the water level measurement system 1 of this invention, is located remotely from the water reservoir WR and connected to said electrodes 20,30 through cables w20 w30, having a length of about 50 cm.

Said electronic circuit 100 includes an alternate (AC) sinusoidal excitation source signal V₁, having frequency f comprised between 500Hz and 10kHz, i.e. sufficiently high to avoid power line disturbances (f>500Hz) and sufficiently low to avoid RF emission and switching apparatus disturbances (f<10kHz). V₁, which has peak amplitude less than 200mV to prevent the chemical dissociation of the substances dissolved in the water, supplies a pair of electrodes 20, 30 dipped into the water filling the water reservoir WR. For the same reason, the linear electrodes 20,30 are made of a material, which is, relatively to the excitation source signal, electrochemically neutral as like stainless steel (i.e AISI 316L). R_{S} is a precision (shunt) resistor flowed, as electrodes 20 and 30 connected in series with it, by the electric current I flowing through the water in the water reservoir WR of the measuring channel D.

The current I is proportional to the conductivity expressed by the quantity of water present between the electrodes 20,30 into the reservoir WR, according to a physics already known in the art, which causes a measurable voltage drop between the terminals T1 and T2 of R_{S}, that is proportional to the water conductivity.

A₁ is a differential amplifier connected between terminals T1, T2 of said resistor R_{S} that de-couple the signal from the electrodes and amplifies said voltage drop, resulting in the output O₁ signal value, useful the further processing.

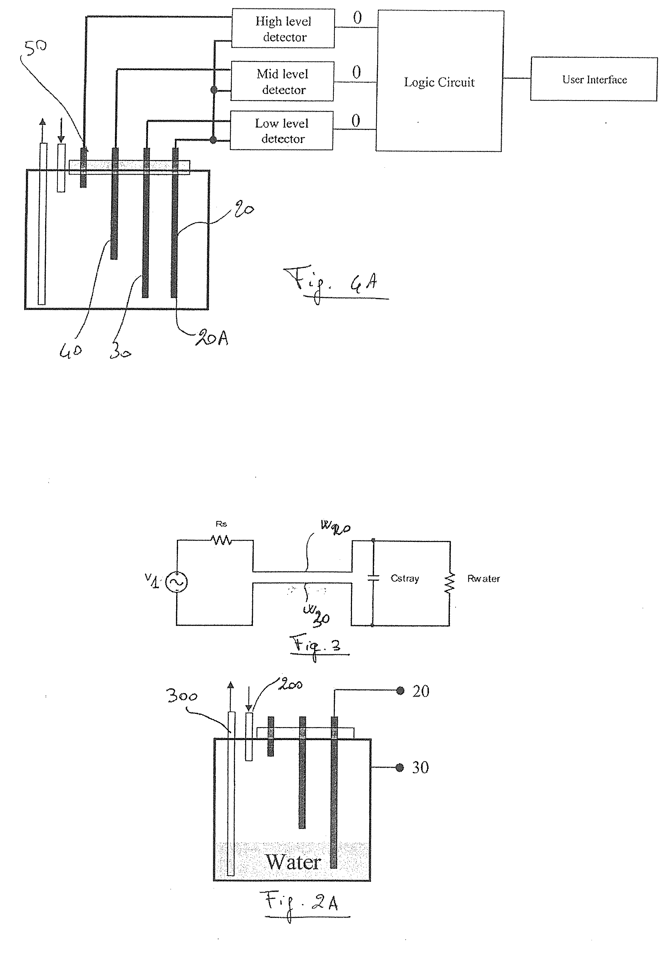

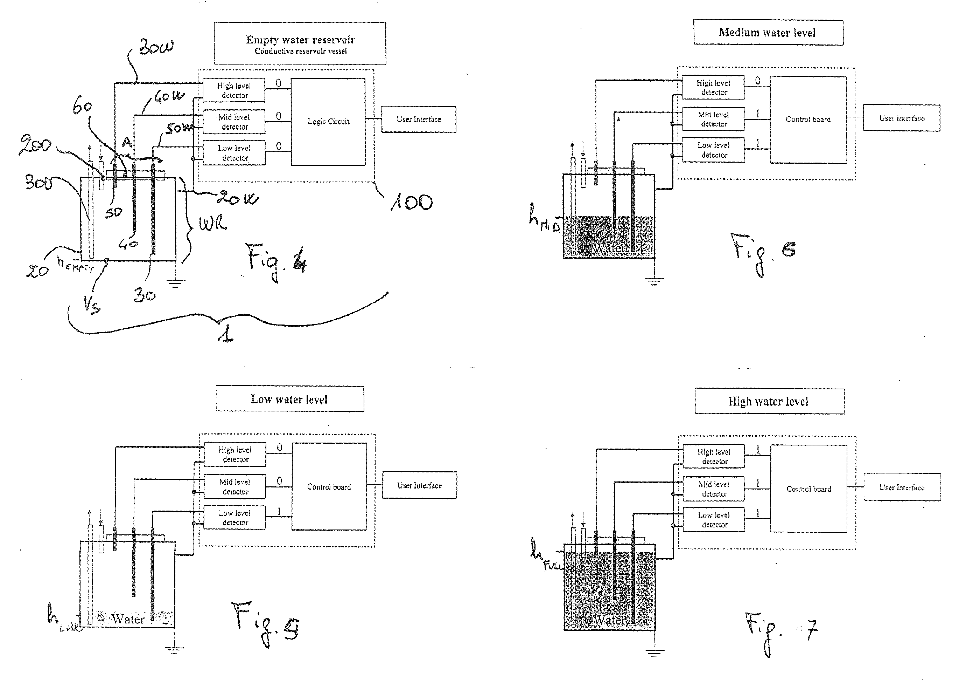

As depicted in Fig 3, channel D can be ideally modeled as a generator V₁ that is in series to Rs, and that supplies a parallel of R_{WATER}, which is the resistive component of the water conductivity, and C_{STRAY}, that is the reactive impedance (capacitance) of the wires w20 w30 connecting the electrodes 20 30 to the electronic synchronous detection circuit 1000. For these reason O₁ signal has an in-phase component with V₁, containing the conductivity-related signal (linked to R_{WATER}), and a 90° phase shift component which is linked with the parasite capacity of the connecting wires (C_{STRAY}). Also the electric noise N of the close, hostile, environment superposes to the output signal O₁.

An improvement of the present invention, compared to the known art, is to separate and eliminate the conductivity-related signal from the reactive component. This becomes possible for the reason that the electronic circuit 1000 includes a synchronous multiplication operation M₁ between the alternate excitation source signal V₁ and the output signal O₁ followed by a filter F1. In fact, as known from the math methods, this multiplication results in an output signal O₂ which has a null average over the period for the phased out components, while preserving the conductivity related signal that is in phase with the source signal V₁. To increase the Signal to Noise Ratio (SNR) of the measuring channel D, a low pass filter F₁ having a cut-off frequency results from a trade off between the necessary SNR and the response time of the filter, being the two requirements in opposition one to each other. The output signal V_{OUT} of the filter F₁ is so proportional to the resistive component only of the water conductivity.

Finally, as in the known art, V_{OUT} is read by a microprocessor µP1 and compared in a comparator C₁ with a fixed threshold voltage value V_{T}, which depends from the electrodes and of the water reservoir WR, to discriminate the presence of the water between the electrodes 20,30. The output V_{D} of the comparator C₁ can assume two logical values: "0" to indicate that the V_{OUT} signal is below the discriminating threshold V_{T}, or "1" when the signal is equal or above said threshold V_{T}.

In case when the reservoir WR is empty, the electrodes 20,30 and R_{S} are not flowed by any electric current I, so that the electronic synchronous detection circuit 1000 amplifies and filters a null signal that has originally only parasitic components. The V_{OUT} signal has a level below the discriminating voltage threshold V_{T}, and the resulting output V_{D} is equal to "0" to indicate that no water has been detected in the channel D, either when the apparatus works in a hostile environment.

In the same way, when the reservoir WR is filled with a low conductivity water (commercial distilled water) submerging, even partially, the electrodes 20, 30, an electric current I flows in said electrodes 20, 30 and trough R_{S}. The electronic synchronous detection circuit 1000 amplifies and filters an input signal that is composed by a parasitic component superposed to a conductivity related signal, providing an output signal V_{OUT} that is filtered from any parasitic component. In this case V_{OUT} is above the discriminating voltage threshold V_{T}, resulting in an output signal V_{D} equal to "1", indicating that water has been detected in the measuring channel D.

In Fig 2A it is described a first preferred embodiment of the water reservoir WR provided of two electrodes, 20 and 30, in which electrode 20 is the metallic chassis of the water reservoir WR. In a second (not shown) embodiment, electrode 20 located into the water reservoir WR is not the chassis of the water reservoir, but a separated electrode. Electrode 30 is a bar shaped, linear element.

An example of implementation for the electronic circuit 1000 is described in Fig. 2B. In this circuit embodiment, Vₓ is a square wave source signal generated by a microprocessor µP₁ having frequency equal to 1 kHz, magnitude of 5 V and duty cycle equal to 50%. The transistor Q1 (BC547) with R1 (10KΩ), R2 (1KΩ), R3 (100KΩ), R4 (2KΩ), C1 (56nF), C2 (220nF) scales and shapes the square wave Vₓ. to obtain an alternate signal having 200mV peak amplitude with smoothed edges, becoming in this way the approximately sinusoidal ac source signal V₁. V₁ feeds the electrodes 20,30 and the precision resistor R_{S} (100KΩ) in series with them. C3 (100pF) is an additional capacitor that filters the high frequency noise coming from the surrounding environment.

According to the schematic circuit, electrode 30 is connected to ground but this is not mandatory for an alternative (not shown) equivalent embodiment. The current I flowing through the electrodes 20, 30, generates a proportional voltage drop on R_{S}, between its terminals T1, T2, which is de-coupled and amplified by A₁ (TS912). R6 (10KΩ) protects the circuit from over voltages and C4 (100nF) is used for AC decoupling. The output O₁ of the amplifier A₁, according to the schematic circuit of the measuring channel D in fig. 1, has to be multiplied with the ac source signal V₁.

The synchronous multiplication of V₁ with O₁ is implemented in a digital equivalent form, according to the digital signal theory, by means of the same microprocessor µP1 used to generate the V_{X} source signal.

The digital multiplication is hence implemented by sampling the voltage signal O₁ in synchronized timings with the source signal V_{X} (and V₁) at the timings A and B (Fig. 8A) of the wave period of V_{X}. The instantaneous water detection voltage indication is calculated from the difference O₁(A)-O₁(B) of the signal O₁ sampled at the two instants A, B of the V_{X} signal period. The resulting output data O₂ is still affected by the electric noise of the close environment and needs to be filtered by the low pass filter F₁. Such F₁ filter is digitally implemented with a response time of 250ms (corresponding to a frequency of 4 kHz) simply obtained by averaging the two O₂ consecutive signals sampled every 250 sec. Digital filtering can also be implemented using any other equivalent method.

In Fig 8 are plotted the circuit signals in the case of empty water reservoir WR, in which: trace V_{X} is the square source signal generated by the microprocessor µP₁; trace V(20_30) is the signal between 20 and 30 (which is connected to ground), trace O₁ is the output signal from the amplifier A₁. Traces V_{PD} and V_{OUT} are the low pass filtered outputs obtained using two detection methods, V_{PD} being obtained using a (non-synchronous) peak detector (not shown) circuit, and V_{OUT} being obtained according the described embodiment of the invention, as the output of F₁ in the synchronous detector circuit 1000.

In Fig. 9 are then shown the previously described signals when the electrodes 20, 30 are covered by commercial distilled water.

Comparing the O₁ signal of Fig. 8, obtained in the case of an empty water reservoir WR, with the same O₁ signal of Fig. 9, related to a water reservoir WR filled with distilled water, it appears evident that, the effects of the stray capacitance C_{STRAY} and of the noise N on the magnitude of the signal are comparable with the water conductivity signal, being the two outputs similar.

Starting from said O₁ signals, the output V_{PD} of the peak detector circuit (not synchronous) when the electrodes are completely dry, gives a voltage level of nearly 4.0V while the output of the synchronous detection circuit 1000, V_{OUT}, is nearly 0.7V. In the case when water reservoir WR is filled with distilled water, the output of the peak detector circuit, V_{PD}, provides an output voltage level that is still around 4.0V, while the output V_{OUT} is about 1.2V.

The parasite effects drive the water detection device based on the peak detector circuit towards an erroneous indication of the presence of water into the water reservoir WR, being the output signals V_{PD} at the same levels in the two cases. In fact, using peak detector circuit, in presence of distilled water it becomes difficult to set a reliable threshold value V_{T}, with a good margin of error, used to discriminate between the presence or the absence of the water into the water reservoir WR.

Differently, the synchronous detection circuit 1000, being capable to filter the parasitic contribution providing a clear and distinct signals, allows to set the discriminating threshold V_{T} to of 0,7V, having also a considerable error margin guaranteeing a reasonable reliability of the measure.

The output signal 03 is then compared with V_{T} in order to define the presence of the water W in the water reservoir WR. The output V_{D}, of the comparison operation is equal to "0" when no water W is detected in the water reservoir WR, or is equal to "1" when the water is been detected.

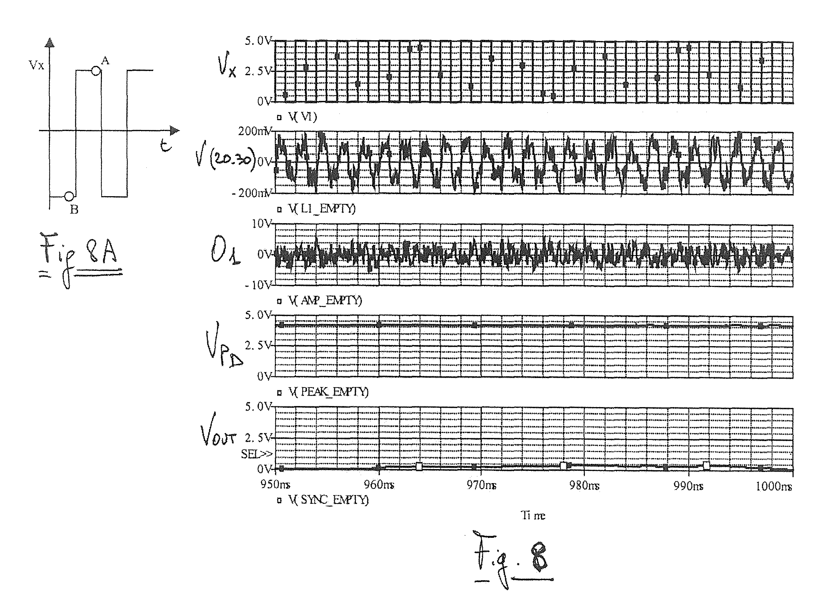

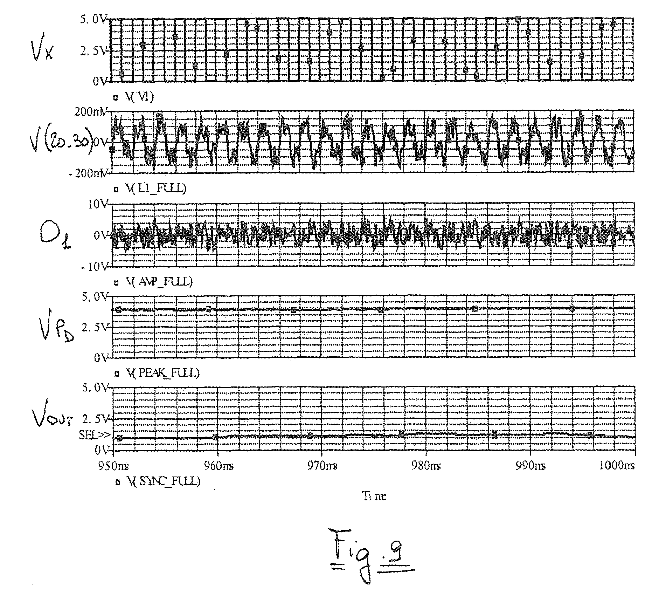

With reference to figures 4 - 7, in order to detect different water levels in the water reservoir, the water level measurement system 1 of the present invention comprises four electrodes 20,30,40,50, and a user interface UI that displays the signal level.

The water reservoir WR, built either in plastic or conductive material, is provided with an inlet pipe duct 200 to feed the water W to the reservoir WR, and an outlet pipe 300 to take the water out from the reservoir.

In a first embodiment illustrated in Figures 3,4,5,6, the vessel VS of the water reservoir WR is made with conductive material, Stainless steel and used as reference electrode 20. Three others measuring electrodes 30, 40, 50, shaped as a straight bar having different lengths with the same diameter 2mm and made of stainless steel, are placed vertically into the water reservoir WR to be covered by the water W when filled into the water reservoir WR. These electrodes 30,40,50 are held together by an insulated cap 60 that sustains them, maintaining the distances and the insulation between the elements and between the elements and the wall of the water reservoir WR. The vertical construction for the electrodes 30, 30a, 40, 50 is made to allow a vertical insertion of their assembly into the water reservoir WR, facilitating also the extraction for the maintenance operations.

In another embodiment showed in fig 4A, the water reservoir vessel VS is made of a non-conductive (i.e. plastic) material and an additional bar shaped electrode 20 is placed into the water reservoir and having its extremity 20a close to the bottom side of the water reservoir vessel VS.

An alternative equivalent embodiment, not showed, presents the electrodes having a horizontal disposition into the reservoir.

In a preferred embodiment, the height of the water reservoir WR is partitioned by the three linear shaped electrodes 30, 40, 50, into a finite (discrete) number of four levels. Said electrodes 30, 40, 50 are linearly scaled in their lengths from the min to the max height of the reservoir level. Consequently the water level is mapped as a mathematical discrete step function of the height, varying from empty to the max level, allow discriminating between four different reservoir levels h, linearly distributed and defined as: "Empty", "Low", "Mid", "Full".

It is clear that the resolution of the measure of the level h depends from the number of electrodes applied in the design of the sensor.

More in general, the shape of the electrodes and their disposition into the water reservoir WR influences the resolution of the level measurement. For instance, in a different embodiment (not illustrated) the distribution of the measurable levels is unequal if using a different number of electrodes or using electrodes having different shape.

To determine the water level into the reservoir it is then necessary to establish a measuring strategy using a proper pair of electrodes. For example, in the described preferred embodiment the measure is taken between the common reference electrode 20 and each one of the variable measuring electrodes 30, 40, 50, according to the level partition created by the disposition of the electrodes into the reservoir. Electrodes 20, 30, 40, 50, are then connected by means of wires 20w, 30w, 40w, 50w to the electronic circuit 100, remotely located from said electrodes (30 cm far). Circuit 100 includes 3 detection circuits, hereafter named High level detector (Hid), Mid level detector (Mid), Low level detector (Lid), having the same structure of the previously described for the "electronic synchronous detection circuit" 1000. Each of said detection circuits Hid, Mid, Lid is connected from one side to the common electrode 20, and from the other side to one of the other measuring electrodes 30, 40, 50. In particular, Lid is connected to electrodes 20 and 30; Mid is connected to electrodes 20 and 40; Hid is connected to electrodes 20 and 50. The reference electrode 20 is also connected to ground in order to increase the immunity to the electrical noise.

In a different embodiment (not illustrated), the measure of the conductivity, can be accomplished using a different connection scheme for the electrodes pairs, according to a different measuring strategy. For instance, the measure can be made using two adjacent electrodes and determining the presence of the water between them. In such case the connection scheme of the electrodes in the single measuring channels doesn't include any electrode 20 common for all the detection circuits and is not required the ground connection for the circuit.

As already described for the channel D, each of the three detection circuits provides an output that can be equal to "0" when the water is not detected in between the electrodes, or equal to "1" when the water is detected.

As illustrated in Fig. 4, when the water reservoir WR is empty (h equal to 0), the three detector circuits provide an output equal to "0". A logic circuit LC implemented in the microprocessor unit µP1, processes the three outputs V_{Hld}, V_{Mld}, V_{Lld} of the detection circuits Hid, Mid, Lid providing an output signal OUT of the level h to the user interface UI, indicating that the water reservoir is empty (OUT equal to Empty). In a preferred embodiment, such signal is also used as feedback signal to the appliance control (not shown) to be used by the functions linked to the water consumption (i.e. safety routines, steam or moisture generation function).

Illustrated in Fig. 5 is the case when the level h of the water W in the water reservoir WR is low. In this condition the only the detection circuit Lid, provides an output V_{Lld} equal to "1", differently from other two detectors Hid, Mid, that provide an output V_{Hld}, V_{Mld}, equal to "0". The logic circuit LC computes an output signal OUT, then displayed on the user interface UI, indicating that the level h of the water W into the water reservoir WR is equal to low (OUT equal to Low).

According to what is shown in Fig. 6, when the water into the water reservoir WR has a medium level h, the two detectors Mid and Lid assume output value V_{Mld}, V_{Lld} equal to "1", while Hid has output V_{Hld} equal to "0". The logic circuit LC processes these signals, providing an output signal OUT equal to Medium then displayed on the user interface UI, indicating that the water reservoir WR is filled at a medium level.

Finally, according to Fig, 7 when the water reservoir WR is completely filled of water, all the three detecting circuits Lid, Mid, Hid sense the presence of the water providing an output V_{Hld}, V_{Mld}, V_{Lld} value equal to "1". The logic circuit LC processes these signals, providing an output signal OUT equal to Full that is displayed on the user interface UI, indicating that the water reservoir WR reaches the full level.

The use of the synchronous detectors circuits Lid, Mid, Hid allows measuring the resistive parts of the measuring channels, rejecting the stray capacitance contribution, and having a narrow bandwidth, guarantee a good noise rejection. For these reason long wires, longer more than 30 cm, can be used to connect the electrodes to the electronic circuit 100 and consequently the detection circuit 100 can be located not necessary close to the electrodes.

According to what explained for the single detection circuit 1000, the water level measurement system 1 designed with the three detection circuits Hid, Mid, Lid, has the capability to detect the water over a wide range of conductivity, varying from the very low values of the distilled water (less than 1 µS/cm), up to the high values of saline water (more than 1000 µS/cm), providing an high versatility of the device, even when noise disturbances are present.

The same apparatus and method are applicable for other (not listed) types of conductive fluids.

## Claims

1. Apparatus for the measure of the water level (h) in a water reservoir (WR) by measuring the electrical conductivity of the water between two electrodes (20, 30), of the type including:
a reference electrode (20),
a measuring electrode (30,40,50) placed inside said water reservoir (WR),
an electronic circuit (1000) comprising
an ac generator which generates an ac source signal (Vₓ, V₁) having a predetermined frequency (f),
a resistor (R_{S}) connected is series with said measuring electrodes (20, 30) and fed with said ac source signal (Vₓ,V₁) providing a conductivity related signal that is measurable between its terminals (T1,T2),
an amplifier (A₁) connected to the terminals (T1, T2) of said resistor (R_{S}) whose output (O₁) is still a conductivity related signal,
a comparator device (C₁) of the type having in input
said conductivity related signal as input,
a threshold value (V_{T}) being used for discriminating the presence of water when compared with said conductivity related signal,
said comparator device (C₁) providing an output a signal indicating the presence of water in the water reservoir (WR),
wires (w20, w30) being provided for connecting said electronic circuit (1000) to the electrodes (20,30,40,50) **characterized in that** the electronic circuit (1000) further comprises a multiplier (M₁) having said conductivity related signal and the ac source signal (V₁, Vₓ) as input **and in that** the output O₂ of said multiplier (M₁) is fed therefore to a filter device (F₁).

2. Apparatus as in claim 1, **characterized in that** it is adapted to indicate the presence of water having a conductivity less than 1 µS/cm filled into said water reservoir (WR)

3. Apparatus as in claim 2, **characterized in that** it is adapted to indicate the presence of water having a conductivity greater than 1000 µS/cm.

4. Apparatus as in claim 1, **characterized in that** the output of said filter device (F₁) rejects any capacitance component (C_{STRAY}) from the signal measurable across terminals (T1, T2) of the resistor (R_{S}).

5. Apparatus as in claim 1, **characterized in that** said wires (w20, w30) are longer than 30 cm.

6. Apparatus as in claim 1, **characterized in that** the ac source signal (V₁, Vₓ), has a frequency (f) comprised between 500Hz and 10kHz.

7. Apparatus as in claim 1, **characterized in that** said filter (F₁) is either implemented with analog or digital circuitry.

8. An apparatus as in claim 1, **characterized in that** said filter (F₁) rejects the electric noise surrounding said apparatus.

9. Apparatus as in claim 1, **characterized in that** said multiplier (M₁) operates a synchronous multiplication.

10. Apparatus as in claim 1, **characterized in that** said ac source signal (V₁, Vₓ) has variable frequency that can be changed in order to skip any coupled noise interference.

11. Apparatus as in claim 1, **characterized in that** said ac source signal (V₁, Vₓ) has a variable frequency in order to get indication of the scaling on the electrodes (20, 30).

12. Apparatus as in claim 1, **characterized in that** the amplifier (A1) has an input impedance greater than 1 MOhm.

13. A method for sensing the presence of the water into a measuring channel (D) based on the measurement of the physical conductivity of the water between two electrodes (20, 30) through an electronic detection circuit (1000), **characterized in that** it includes a synchronous multiplication operation between a conductivity related signal and an AC source signal (V₁, Vₓ) and **in that** the resulting signal is then filtered with a low pass filter.

14. A method as in claim 13, **characterized in that** said ac source signal (V₁, Vₓ) has variable frequency (f) that can change in order to skip any coupled noise interference.

15. A method as in claim 11, **characterized in that** said ac source signal (V₁, Vₓ) has a variable frequency (f) in order to get indication of the scaling on the electrodes (20, 30).
